# FASCICULE DE BREVET EUROPEEN

(11) **EP 2 946 373 B1**
(45) Date de publication et mention de la délivrance du brevet: **13.03.2019**
(21) Numéro de dépôt: 14700458.4
(22) Date de dépôt: 10.01.2014
(51) Int. Cl.: G08B 29/18, H04L 29/08

(54) **SYSTEME DE CAPTEURS INTEGRES EN SUITE**
SYSTEM INTEGRIERTER SERIESENSOREN
SYSTEM OF INTEGRATED SERIES SENSORS

(30) Priorité: 16.01.2013 FR 1300085
(43) Date de publication de la demande: 25.11.2015
(73) Titulaire: THALES, 92400 Courbevoie (FR)
(72) Inventeur: GIRARD-CLAUDON, Raphaël, Raoul, Adrien, F-78851 Elancourt Cedex (FR); CHABOD, Luc, Claude, F-78851 Elancourt Cedex (FR)
(74) Mandataire: Lucas, Laurent Jacques
(86) Numéro de dépôt international: PCT/EP2014/050412
(87) Numéro de publication internationale: WO 2014/111319

(56) Documents cités:
- FR-A1- 2 935 860
- KR-A- 20120 088 294
- US-A1- 2004 007 121
- US-A1- 2010 211 359
- US-B1- 7 450 006

## Description

La présente invention concerne un système de capteurs intégrés en suite. Elle s'applique notamment dans le domaine de capteurs liés à un système de mission ou de combat, ces capteurs pouvant être de toutes natures, tels que par exemple des capteurs radars, ESM, optroniques ou de télécommunication. L'invention peut s'appliquer à la fédération de capteurs séparés mais aussi à l'architecture de capteurs multifonctions.

Un problème à résoudre est celui de l'amélioration de la coordination entre les capteurs au sein d'une plateforme, ou par extension à des capteurs sur plusieurs plateformes. Cette amélioration est nécessaire si l'on veut tirer un meilleur bénéfice des informations collectées par chaque capteur, ainsi que mettre en place une meilleure coordination des ressources mises en oeuvre par les capteurs, telles que le temps, la fréquence ou la consommation d'énergie notamment.

Dans les solutions de l'art antérieur, les plateformes de combat ou de surveillance portent des capteurs de natures variées qui sont pilotés par un système de mission. Chaque capteur reçoit ses ordres du système qui lui définit son mode de fonctionnement à un instant donné puis le capteur fournit en retour des données plus ou moins pré-traitées. Ces données sont ensuite fusionnées par le système de mission pour élaborer une situation tactique globale, cette situation pouvant être partagée entre plateformes.

Les solutions existantes sont donc de nature pyramidale dans la mesure où la circulation des ordres et des résultats est verticale.

Ces solutions présentent plusieurs inconvénients, en particulier :
- les boucles d'observation, de décision et d'action ne peuvent pas être courtes alors que certaines fonctions nouvelles réclament une réactivité très forte entre capteurs et actuateurs ;
- la quantité d'informations que les capteurs peuvent échanger reste limitée en raison de la bande passante des liaisons entre niveaux, donc des synchronisations fine sont impossibles ;
- les architectures des systèmes de capteurs sont souvent liées à la plateforme d'accueil, ce qui limite la généricité de ces systèmes et leur portabilité vers d'autres plateformes.

Un but de l'invention est notamment de pallier les inconvénients précités, à cet effet, l'invention a pour objet un système de capteurs intégrés en suite communicante, lesdits capteurs étant aptes à échanger des données bidirectionnelles avec un organe par un réseau de communication principal, les données issues desdits capteurs étant classées selon des niveaux d'informations différents, au moins deux capteurs étant reliés par un réseau de communication pour échanger directement des données selon une ou plusieurs liaisons de communications, une liaison étant propre à chaque niveau d'informations.

Lesdits capteurs comportant au moins un niveau d'informations de nature décisionnelle et un niveau d'informations de nature logique, une liaison est par exemple dédiée aux informations de nature décisionnelle et une liaison est dédié aux informations de nature logique.

Les informations de nature décisionnelles comportent par exemple des informations d'état interne desdits capteurs ou des informations de gestion des ressources allouées.

Les ressources allouées sont par exemple comprises dans la liste suivante : temps, espace, spectre électromagnétique, spectre optique, puissance émise, énergie consommée, conditionnement thermique des capteurs, capacité de calcul et de traitement.

Les informations de nature logique comportent par exemple des données de synchronisation ou des résultats de détections produits par lesdits capteurs. Un canal de communication est par exemple réservé à chaque niveau d'informations.

Des données d'au moins un autre niveau d'informations sont échangées entre capteurs en transitant par la liaison propre au niveau d'informations de nature logique, lesdites données étant transformées au préalable en données de nature logique.

Les informations de nature physique, captées par lesdits capteurs, sont par exemple échangées par la liaison propre au niveau d'informations de nature logique.

Les informations de nature fonctionnelle sont par exemple échangées par la liaison propre au niveau d'informations de nature logique.

Les liaisons entre capteurs propres à chaque niveau d'informations et les formats d'échange sont par exemple normalisés.

Les échanges d'informations se font par exemple selon des formats auto-descriptifs.

Dans un mode de réalisation particulier, le système comporte des capteurs multifonctions.

D'autres caractéristiques et avantages de l'invention apparaîtront à l'aide de la description qui suit, faite en regard de dessins annexés qui représentent :
- la figure 1, une illustration d'un système de capteurs intégrés en suite selon l'art antérieur ;
- la figure 2, un exemple de réalisation de l'art antérieur avec deux capteurs ;
- la figure 3, un exemple de mise en oeuvre de l'invention dans le cas de la figure 2 ;
- la figure 4, un exemple de réalisation d'un système selon l'invention.

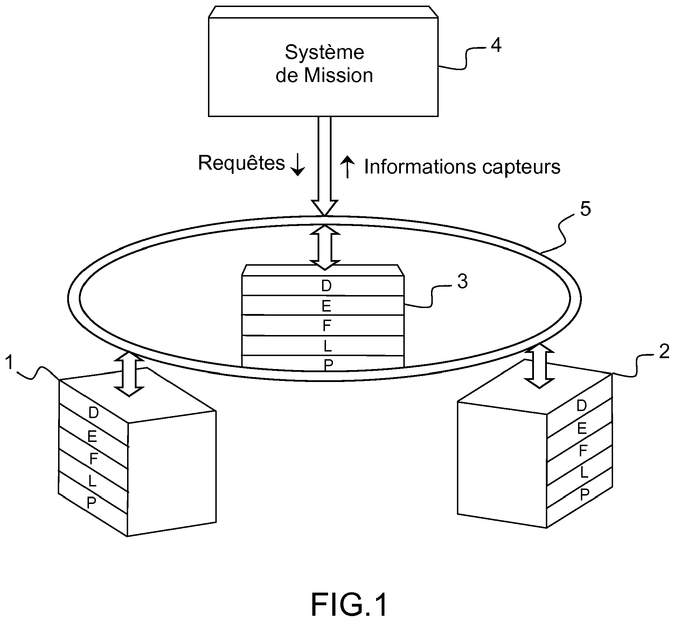

La figure 1 illustre un système de capteurs selon l'art antérieur. Les suites de capteurs fédérés par un organe central posent des problèmes comme le montrent les constats de limitations suivants :
- les besoins des plateformes de combat ou de surveillance vont demander des capacités nouvelles telles que réactivité, autonomie, flexibilité, discrétion, coopération inter porteurs ou robustesse notamment ;
- ces besoins se traduiront par deux évolutions majeures pour la partie capteurs : une montée en autonomie et en intelligence propre des capteurs, associée à une coordination plus forte entre capteurs ;
- les architectures fédérées ne répondront pas à ces besoins parce que les données et les décisions sont décentralisées par les systèmes de mission, avec des limitations sur la richesse des échanges et sur l'allocation quasi exclusive des ressources ;
- l'ingénierie des capteurs est faite de manière séparée et il n'existe pas de modèle unique permettant de traiter dans son ensemble le fonctionnement d'une suite de capteurs.

Le système de la figure 1 comporte à titre d'exemple trois capteurs 1, 2, 3 fédérés par un organe central 4, en l'occurrence un système de mission. Les requêtes fournies par le système de mission 4 circulent via un bus ou réseau de communication 5 relié à chaque capteur 1, 2, 3. De même, les capteurs fournissent au système de mission 4 leurs informations via ce bus 5. Il n'y a quasiment aucune liaison entre les capteurs, le pilotage étant effectué par le système de mission 4.

Les solutions connues prennent généralement le problème de la mise en oeuvre coordonnée de capteurs de manière partielle.

L'approche dite « JDL » selon l'expression anglo-saxonne « Join Directors of Laboratories » met en oeuvre un mécanisme de résultats de capteurs, mais il est très centré sur les aspects liés à l'information et ne se décline pas facilement sur une architecture de système de capteurs. Le modèle dit « Waterfall » qui en est dérivé présente les mêmes limitations.

A l'inverse, l'approche dite « OODA » selon l'expression anglo-saxonne « Observe, Orientate, Decide, Act » ou modèle de Boyd utilise des boucles temporelles liées aux missions mais ne permet pas de traiter la diffusion des allocations de ressources ou la remontée des informations dans un système. Le modèle dit « Omnibus » qui est dérivé présente les mêmes limitations.

Le modèle dit « USAF » selon l'expression « US Air Force » ainsi que le modèle dit « LAAS » selon l'expression « Laboratoire d'Analyse et d'Architecture de Systèmes » présentent un degré de richesse accru. Il y a bien la diffusion des commandes et la remontée des résultats dans un système de capteurs et la présence de boucles décisionnelles au niveau d'une fonction opérationnelle ou plus globalement d'une mission. Cependant ils ne prennent pas en compte les boucles de coordination fines qui doivent exister entre des fonctions de capteurs différents (qu'ils soient de même nature ou de natures différentes) tels que prévu dans le futur.

Comme indiqué précédemment, les solutions connues ne sont pas satisfaisantes. En effet, une des particularités de capteurs tels que les capteurs radar, ESM ou optronique est de manipuler des données et des informations de synchronisation (horloges, latences ...) avec des échelles de temps très fines, pouvant descendre jusqu'à quelques nanosecondes.

La coordination de tels capteurs implique de pouvoir partager ces informations, ce qui n'est pas possible lorsque les échanges transitent par un niveau supérieur sans remettre en cause la gestion et l'obtention de leurs performances individuelles. Par exemple, dans le modèle LAAS, deux capteurs physiques situés au niveau inférieur P ne sont coordonnés qu'au niveau fonctionnel, voire décisionnel. De même, dans le modèle USAF, les capteurs disposent bien de boucles de contrôle au niveau inférieur du modèle, mais ces boucles ne relient que les ressources et les résultats d'un unique capteur donné.

Si on souhaite par exemple échanger des plots entre deux radars, ou utiliser un signal reçu par une antenne radar pour faire une détection ESM, les architectures classiques n'en sont pas capables.

Enfin, si on souhaite communiquer à un capteur ESM les tables de séquencement fines d'un radar dans le but d'améliorer la compatibilité électromagnétique, ce n'est pas possible.

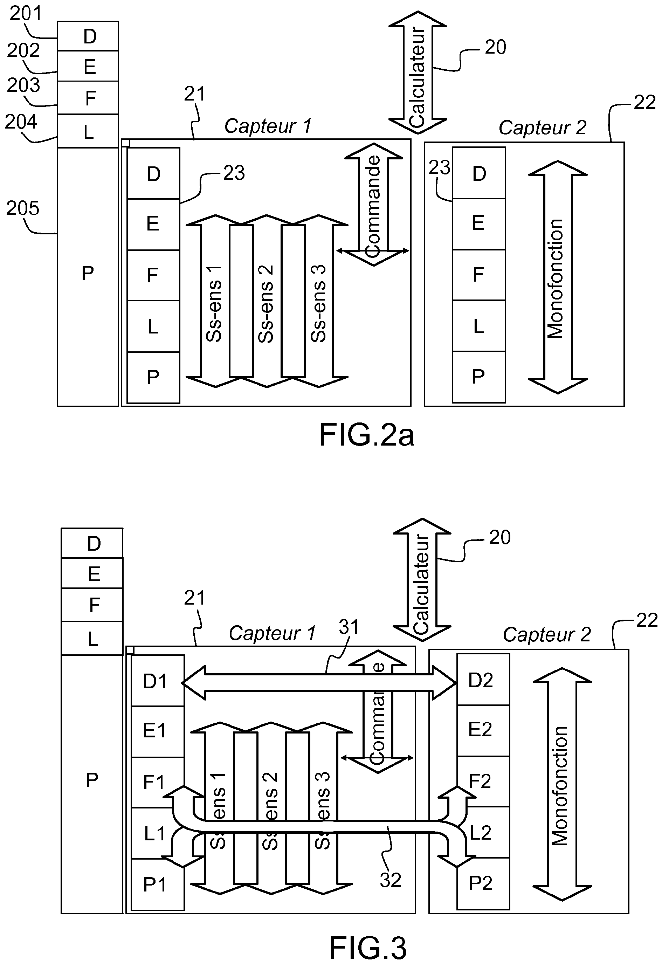

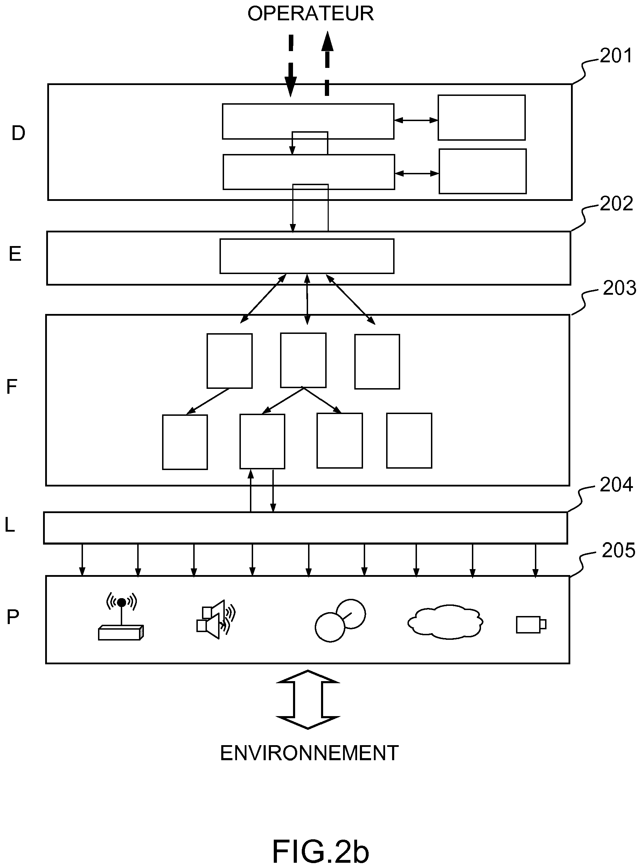

La figure 2 illustre un système de capteurs fédérés, plus particulièrement elle présente un exemple avec deux capteurs 21, 22 fédérés par un calculateur de mission 20. Dans la suite de la description, on utilise à titre d'exemple et pour des raisons de simplicité le modèle conventionnel LAAS pour décrire une architecture de capteur selon l'invention. Le modèle LAAS, originellement utilisé en robotique, définit cinq niveaux qui permettent de lier un donneur d'ordres à des moyens physique dédiés. Les donneurs d'ordres sont par exemple un système de pilotage ou un utilisateur. Les moyens physiques dédiés sont par exemple des capteurs ou des actuateurs. Ces niveaux sont :
- niveau D : Décision
- niveau E : Exécution
- niveau F : Fonctions
- niveau L : Logique
- niveau P : Physique

Ce modèle est par exemple adaptable à un avions de combat, le niveau P contenant alors les divers capteurs de la plateforme (optique, radars, détecteurs divers, sondes, ESM ...). Dans l'exemple de la figure 2, le niveau P contient les deux capteurs 21, 22.

On peut noter que ce modèle est gigogne, c'est-à-dire que les capteurs disposent aussi en interne d'une structuration décisionnelle 23 avec les niveaux D, E, F, L et P, cette structuration étant plus ou moins formalisée selon le degré de complexité des capteurs.

Dans une architecture traditionnelle, ces niveaux D, E, F, L et P ne communiquent quasiment pas avec un niveau similaire d'un autre capteur, sauf par des signaux très spécifiques, très peu nombreux.

Selon l'invention, on créée deux niveaux de communications standardisés entre capteurs :
- un niveau de nature décisionnelle, au niveau D (pouvant éventuellement, dans certaines variantes de l'invention, transiter par le niveau E), par lequel vont transiter des informations qui permettent aux capteurs d'optimiser leur fonctionnement conjoint, ces informations étant des requêtes, des informations d'états internes, des informations de gestion de performances par exemple ;
- un niveau de nature logique, au niveau L, par lequel vont transiter des informations à plus haut débit, ces informations étant des données de synchronisation et des résultats de détection plus ou moins prétraités.

La figure 3 illustre un exemple de mise en oeuvre de l'invention dans le cas de l'exemple du système de la figure 2 avec les deux capteurs 21, 22 fédérés par le calculateur de mission 20.

Un premier niveau de communication 31 relie le niveau D du premier capteur 21 au niveau D du deuxième capteur 22. Un deuxième niveau de communication relie le niveau L du premier capteur 21 au niveau L du deuxième capteur 22.

Les niveaux F et P n'échangent pas directement d'informations entre les capteurs 21, 22. Toute transmission entre les capteurs, pour ces niveaux F et P, se fait par le niveau L comme l'illustre la figure 3. Ce choix permet d'assurer un découpage entre les spécificités des capteurs et la nature des informations transmises.

Par exemple, si le premier capteur 21 doit transmettre des données échantillonnées au deuxième capteur 22, sa couche de niveau logique L, notée L1, met en forme les données issues de sa couche physique P, notée P1. Puis la couche L1 transmet les données mises sous forme logique à la couche logique L, notée L2, du deuxième capteur pour exploitation par une ou plusieurs fonctions de la couche fonction F, notée F2, du deuxième capteur. Ainsi, les données P1, données physiques issues du premier capteur 21 par exemple, sont transmises à une ou plusieurs fonctions F2, du deuxième capteur 22 pour exploitation ou analyse.

De la même façon, si un résultat d'analyse d'une fonction du premier capteur, notée F1, doit être transmise au deuxième capteur, le trajet d'informations est par exemple F1, L1, L2, F2.

Les échanges d'informations au niveau L se font par exemple selon des formats auto-descriptifs, c'est-à-dire que la description des formats de données est contenue dans la transmission elle-même.

Les niveaux décisionnels D, notés D1 et D2, des capteurs peuvent également échanger des informations de nature plus macroscopique, telles que des planifications à moyens ou long terme des fonctions de capteurs, résultats finaux des traitements de capteurs, ou vision globale de l'environnement.

L'invention permet de répondre aux besoins nouveaux des systèmes de capteurs. En effet, les communications entre les capteurs 21, 22 qui ont été mises en oeuvre permettent d'échanger au moins quatre catégories d'informations nécessaires.

En ce qui concerne les informations d'environnement ou de situation, les communications au niveau décisionnel D permettent d'échanger entre capteurs des informations fines en temps réel sur la situation entraînant un fonctionnement plus efficace de chaque capteur.

En ce qui concerne les besoins en ressources, les communications décisionnelles D (ou dans certains cas au niveau E), permettent d'échanger entre capteurs des informations fines sur leur consommation présente et future des ressources pour optimiser leur allocation. Ces ressources sont notamment le temps, l'espace, le spectre fréquentiel ou optique, la puissance émise, l'énergie consommée, le conditionnement thermique des capteurs ou encore la capacité de calcul et de traitement. Cette liste n'étant pas exhaustive.

En ce qui concerne les données, les communications au niveau logique L permet d'échanger entre capteurs des données de niveau intermédiaire permettant une réactivité accrue en termes de pistage ou de désignation des cibles ou encore d'identification. Ces données intermédiaire peuvent être des plots radar ou des images désignant des zones d'intérêt par exemple. D'autres types de données intermédiaires peuvent bien sûr être échangés. En ce qui concerne les signaux ou échantillons, les communications au niveau logique L permettent d'échanger entre capteurs des signaux bruts numériques, en sortie des codeurs, ces signaux pouvant être exploités par l'autre capteur ou les autres capteurs.

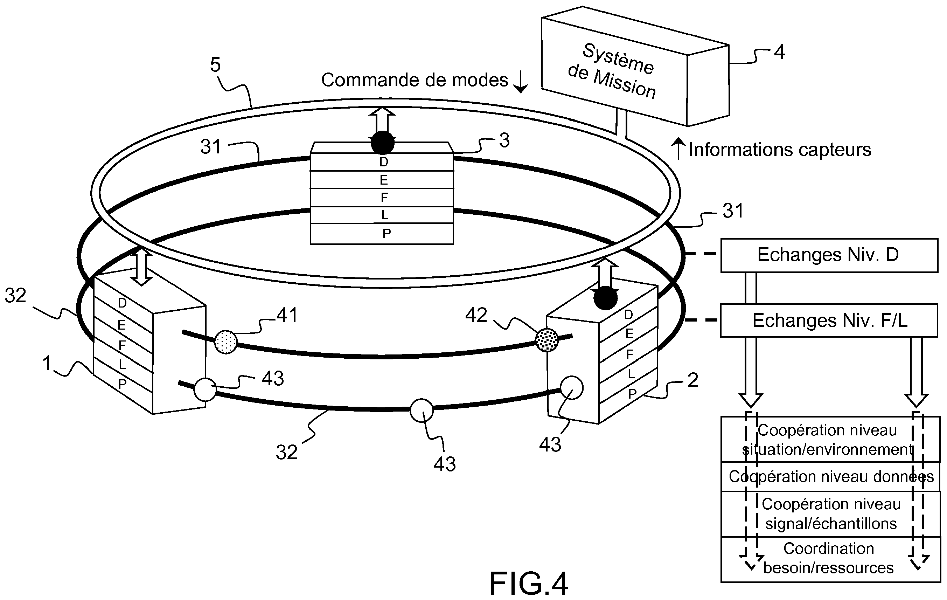

La figure 4 illustre un exemple de systèmes selon l'invention de capteurs communicant, fédérés par un système de mission 4. L'architecture reprend à titre d'exemple le schéma de base de la figure 1 avec trois capteurs 1, 2, 3. Comme dans la figure 3, les capteurs comportent une structure décisionnelle D, E, F, L, P plus ou moins formalisée selon leur complexité.

La mise en oeuvre de la communication entre les capteurs peut s'appliquer à des capteurs existant ou à des capteurs nouveaux. Elle comporte les étapes suivantes :
- Mise en conformité de l'architecture fonctionnelle des capteurs retenus avec un modèle unique, le modèle de type LAAS utilisé dans l'exemple figure 3 est un simple exemple, l'invention pouvant s'appliquer à d'autres modèles comme il sera indiqué par la suite ;
- Etablissement d'un réseau physique 31, 32 entre les capteurs 1, 2, 3 qui peut être porté par un standard informatique et qui peut contenir des transmissions sans fil lorsque les capteurs se situent sur plusieurs plateformes. Le standard informatique peut être haut débit / faible latence, ce peut être par exemple un câblage Ethernet ou autre.
- Modification des fonctions des capteurs qui peuvent émettre ou recevoir des informations de coordination vers les autres capteurs pour leur ajouter la capacité de lecture et d'écriture de données vers la couche logique L.
- Ajout à la couche logique L et à la couche physique P de protocoles standardisés permettant l'échange des informations multi-capteurs.

Dans l'exemple de la figure 4, le système de mission envoie ses requêtes aux capteurs via le réseau 5, réseau principal, auquel chaque capteur 1, 2, 3 est interfacé, ce réseau peut être du même type que le réseau 31, 32 reliant les capteurs entre eux, par exemple un réseau du type Ethernet. Ces requêtes peuvent être par exemple des commandes de mode de fonctionnement. De même, les informations émises par les capteurs via le système de mission transitent par ce réseau principal 5.

La figure 4 illustre différentes coopérations possibles entre capteurs. Au niveau décision D les informations de situation et d'environnement 41 sont échangées ainsi que les informations de besoin en ressources 42. Au niveau logique L, les données intermédiaires 43 sont échangées, ainsi que les signaux ou échantillons bruts issus des codeurs. Les informations de niveau physique P ou fonctionnel F transitent sont également échangés via le niveau logique L.

L'invention a été décrite pour une architecture basée sur un modèle du type LAAS, elle peut s'appliquer à d'autres modèles. Plus généralement, l'invention met en oeuvre un ensemble de protocoles de coordination directe entre les capteurs, chaque protocole véhiculant une classe d'informations. Dans l'exemple précédent, les classes d'informations correspondent aux niveaux D et L. Ces protocoles peuvent être déployés sur un bus unique ou sur plusieurs bus dédiés 31, 32, chaque bus étant alors dédié à une classe d'informations. Une règle d'échange est établie pour chaque protocole. Les protocoles d'échange sont ainsi établis pour au moins deux classes d'informations spécifiques dans l'architecture des capteurs, les informations de niveau décisionnel et les informations du niveau d'abstraction de service correspondant respectivement aux niveaux décision D et logique L dans l'exemple de type LAAS précédent. On caractérise enfin la nature des informations qui sont destinés à transiter entre les capteurs selon les niveaux sélectionnés, D et L par exemple.

Les liens directs 31, 32 entre les capteurs permettent notamment d'accroître leur synergie et de créer des boucles courtes de niveau de capteur conduisant à une réactivité accrue. Ces liens véhiculent des informations de nature, de débit et de latence variés. Ils sont par exemple associés à une structure de fonctions standardisées pour tous les capteurs du système, de façon à établir les liens pour des niveaux homogènes entre capteurs, niveaux décisionnel ou logique par exemple.

Plus particulièrement, les liaisons inter-capteurs, paramétrées en haut débit et en faible latence, peuvent avantageusement véhiculer des informations de coordination en boucle ouverte. On emploie ces informations, d'une première classe, pour gérer en temps réel les allocations de ressources, en particulier le partage du temps et des fréquences pour des applications radar par exemple. On emploie aussi ces informations, d'une deuxième classe, pour enrichir de manière croisée les traitements des capteurs ainsi que la perception de l'environnement. Les liaisons 31, 32 entre capteurs sont par exemple normalisées, par l'utilisation de supports physiques et de protocoles standardisés, permettant l'ajout de capteurs nouveaux à un réseau existant. Les formats d'échange sont aussi par exemple normalisés et passent par des couches spécifiques de l'architecture de chaque capteur pour permettre à chacun de ces capteurs d'accéder aux informations d'autres capteurs en se découplant du matériel.

L'invention apporte notamment les avantages suivants :
- Une compatibilité avec les architectures de capteurs existantes : le pilotage des capteurs par l'organe de commande, le système de mission 4 par exemple, peut rester assez proche de l'existant, les liaisons nouvelles 31, 32 étant transparentes tout en permettant de fournir des performances accrues et/ou des informations enrichies ;
- Une évolution possible vers des architectures multifonctions intégrées. En effet, la solution apportée par l'invention étant fonctionnelle, elle peut être mise en oeuvre sur des suites de capteurs avec une mise en liaison par des bus physiques ou des liaisons sans fil ;
- Une standardisation des interfaces entre les fonctions et les ressources des capteurs, favorisant la réutilisation des développements et la création de briques de base pour les produits capteurs ;
- Une possibilité de partage des ressources entre capteurs, une fonction de niveau F d'un premier capteur pouvant être exécutée sur un autre capteur dès lors que les données nécessaires sont échangées via la couche L ;
- Permettre une organisation rationnelle des processus de vérification et de validation d'un système de capteurs, en permettant d'organiser puis d'isoler des chaînes fonctionnelles séparées, pilotées par une fonction de contrôle globale prédictible.

L'invention peut aussi s'appliquer à un système à capteurs multifonctions intégrés. Dans un tel mode de réalisation, les éléments physiques qui composent la suite de capteurs peuvent être partagés, donc les fonctions qui constituent les niveaux P à D ne sont pas nécessairement implantées sur des éléments séparés. Les fonctions numériques peuvent par exemple être centralisées dans un seul capteur. Dans ce cas, les coopérations précédemment décrites restent appliquées, en particulier les liens sont créés mais peuvent être locaux entre fonctions proches.

Avantageusement, le système peut comporter une suite de capteurs RF ou optroniques équipant une plateforme de surveillance ou de mission.

La description a été faite à titre d'exemple avec des informations de capteurs classées selon des informations de type D, E, F, L, P mais l'invention s'applique pour tous autres types de classement, pourvu que les données soient classées selon des niveaux d'informations différents. Quel que soit l'ensemble des différents niveaux d'informations, les échanges d'informations entre capteurs se font avantageusement par les niveaux décisionnels et logiques.

## Revendications

1. Système de capteurs intégrés en suite communicante, lesdits capteurs (1, 2, 3, 21, 22) étant aptes à échanger des données bidirectionnelles avec un organe (4, 20) par un réseau de communication principal (5), les données issues desdits capteurs (1, 2, 3, 21, 22) étant classées selon des niveaux d'informations différents **caractérisé en ce qu'**au moins deux capteurs sont reliés par un réseau de communication (31, 32) pour échanger directement des données selon une ou plusieurs liaison de communications, une liaison étant propre à chaque niveau d'informations.

2. Système selon la revendication 1, **caractérisé en ce que** lesdits capteurs comportant au moins un niveau d'informations de nature décisionnelle et un niveau d'informations de nature logique, une liaison (31) est dédié informations de nature décisionnelle et une liaison (32) est dédié aux informations de nature logique.

3. Système selon la revendication 2, **caractérisé en ce que** les informations de nature décisionnelles comportent des informations d'état interne desdits capteurs.

4. Système selon l'une quelconque des revendications 2 ou 3, **caractérisé en ce que** les informations de nature décisionnelle comportent des informations de gestion des ressources allouées.

5. Système selon la revendication 4, **caractérisé en ce que** les ressources allouées sont comprises dans la liste suivante : temps, espace, spectre électromagnétique, spectre optique, puissance émise, énergie consommée, conditionnement thermique des capteurs, capacité de calcul et de traitement.

6. Système selon l'une quelconque des revendications 2 à 5, **caractérisé en ce que** les informations de nature logique comportent des données de synchronisation.

7. Système selon l'une quelconque des revendications 2 à 6, **caractérisé en ce que** les informations de nature logique comportent des résultats de détections produits par lesdits capteurs.

8. Système selon l'une quelconque des revendications 2 à 7, **caractérisé en ce qu'**un canal de communication (31, 32) est réservé à chaque niveau d'informations.

9. Système selon l'une quelconque des revendications 2 à 8, **caractérisé en ce que** des données d'au moins un autre niveau d'informations (F, P) sont échangées entre capteurs en transitant par la liaison propre au niveau d'informations de nature logique (L), lesdites données étant transformée au préalable en donnée de nature logique.

10. Système selon la revendication 9, **caractérisé en ce que** les informations de nature physique (P), captées par lesdits capteurs, sont échangées par la liaison propre au niveau d'informations de nature logique (L).

11. Système selon l'une quelconque des revendications 9 ou 10, **caractérisé en ce que** les informations de nature fonctionnelle (F), sont échangées par la liaison propre au niveau d'informations de nature logique (L).

12. Système selon l'une quelconque des revendications précédentes, **caractérisé en ce que** les liaisons entre capteurs propres à chaque niveau d'informations et les formats d'échange sont normalisés.

13. Système selon la revendication 12, **caractérisé en ce que** les échanges d'informations se font selon des formats auto-descriptifs.

14. Système selon l'une quelconque des revendications précédentes, **caractérisé en ce qu'**il comporte des capteurs multifonctions.

## Patentansprüche

1. System von in einer kommunizierenden Folge integrierten Sensoren, wobei die Sensoren (1, 2, 3, 21, 22) in der Lage sind, bidirektionale Daten mit einem Organ (4, 20) über ein Kommunikations-Hauptnetzwerk (5) auszutauschen, wobei die Daten, welche aus den Sensoren (1, 2, 3, 21, 22) stammen, in unterschiedliche Informationsstufen eingestuft sind, **dadurch gekennzeichnet, dass** mindestens zwei Sensoren über ein Kommunikationsnetzwerk (31, 32) verbunden sind, um Daten direkt über eine oder mehrere Kommunikationsverbindungen auszutauschen, wobei jeweils eine Verbindung spezifisch für jede Informationsstufe vorgesehen ist.

2. System nach Anspruch 1, **dadurch gekennzeichnet, dass**, da die Sensoren mindestens eine Informationsstufe mit Entscheidungsnatur und eine Informationsstufe mit logischer Natur beinhalten, eine Verbindung (31) spezifisch für Entscheidungsinformationen und eine Verbindung (32) spezifisch für logische Informationen vorgesehen ist.

3. System nach Anspruch 2, **dadurch gekennzeichnet, dass** die Entscheidungsinformationen interne Statusinformationen der Sensoren enthalten.

4. System nach einem der Ansprüche 2 oder 3, **dadurch gekennzeichnet, dass** die Entscheidungsinformationen Informationen zur Verwaltung der zugewiesenen Ressourcen beinhalten.

5. System nach Anspruch 4, **dadurch gekennzeichnet, dass** die zugewiesenen Ressourcen in folgender Liste beinhaltet sind: Zeit, Raum, elektromagnetisches Spektrum, optisches Spektrum, abgegebene Leistung, verbrauchte Leistung, thermische Konditionierung der Sensoren, Berechnungs- und Bearbeitungskapazität.

6. System nach einem der Ansprüche 2 bis 5, **dadurch gekennzeichnet, dass** die Entscheidungsinformationen Synchronisierungsdaten beinhalten.

7. System nach einem der Ansprüche 2 bis 6, **dadurch gekennzeichnet, dass** die logischen Informationen Ergebnisse von Erkennungen beinhalten, welche durch die Sensoren erzeugt werden.

8. System nach einem der Ansprüche 2 bis 7, **dadurch gekennzeichnet, dass** ein Kommunikationskanal (31, 32) einer jeden Informationsstufe vorbehalten ist.

9. System nach einem der Ansprüche 2 bis 8, **dadurch gekennzeichnet, dass** Daten von mindestens einer Informationsstufe (F, P) zwischen Sensoren ausgetauscht werden, indem sie über die spezifisch logischen Informationen vorgesehene Verbindung (L) fließen, wobei die Daten zuvor in Daten logischer Natur umgewandelt werden.

10. System nach Anspruch 9, **dadurch gekennzeichnet, dass** die Informationen physischer Natur (P), welche durch die Sensoren aufgenommen werden, über die der spezifisch für logische Informationen vorgesehene Verbindung (L) ausgetauscht werden.

11. System nach einem der Ansprüche 9 oder 10, **dadurch gekennzeichnet, dass** die Informationen funktionaler Natur (F) über die spezifisch für logische Informationen vorgesehene Verbindung (L) ausgetauscht werden.

12. System nach einem der vorhergehenden Ansprüche, **dadurch gekennzeichnet, dass** die Verbindungen zwischen den Sensoren, welche spezifisch für eine jede Informationsstufe vorgesehen sind, und die Austauschformate genormt sind.

13. System nach Anspruch 12, **dadurch gekennzeichnet, dass** die Informationsaustausche in selbstbeschreibenden Formaten erfolgen.

14. System nach einem der vorhergehenden Ansprüche, **dadurch gekennzeichnet, dass** es Multifunktionssensoren beinhaltet.

## Claims

1. A system of sensors integrated into a communicating suite, said sensors (1, 2, 3, 21, 22) being capable of exchanging bidirectional data with a body (4, 20) via a main communication network (5), the data from said sensors (1, 2, 3, 21, 22) being classified according to different information levels, **characterized in that** at least two sensors are connected by a communication network (31, 32) in order to exchange data directly via one or more communication links, one link being associated with each information level.

2. The system as claimed in claim 1, **characterized in that**, said sensors comprising at least one information level of a decision type and one information level of a logical type, one link (31) is dedicated to information of a decision type and one link (32) is dedicated to information of a logical type.

3. The system as claimed in claim 2, **characterized in that** the information of a decision type comprises information on the internal state of said sensors.

4. The system as claimed in either of claims 2 or 3, **characterized in that** the information of a decision type comprises information on the control of allocated resources.

5. The system as claimed in claim 4, **characterized in that** the allocated resources are included in the following list: time, space, electromagnetic spectrum, optical spectrum, transmitted power, energy consumption, thermal conditioning of the sensors, and computing and processing power.

6. The system as claimed in any of claims 2 to 5, **characterized in that** the information of a logical type comprises synchronization data.

7. The system as claimed in any of claims 2 to 6, **characterized in that** the information of a logical type comprises detection results produced by said sensors.

8. The system as claimed in any of claims 2 to 7, **characterized in that** one communication channel (31, 32) is reserved for each information level.

9. The system as claimed in any of claims 2 to 8, **characterized in that** data from at least one other information level (F, P) are exchanged between sensors by passing through the link associated with the logical information level (L), said data having been converted in advance to logical data.

10. The system as claimed in claim 9, **characterized in that** the information of a physical type (P), captured by said sensors, is exchanged via the link associated with the logical information level (L).

11. The system as claimed in either of claims 9 or 10, **characterized in that** the information of a functional type (F) is exchanged via the link associated with the logical information level (L).

12. The system as claimed in any one of the preceding claims, **characterized in that** the links between sensors associated with each information level and the exchange formats are standardized.

13. The system as claimed in claim 12, **characterized in that** the information exchanges take place in auto-descriptive formats.

14. The system as claimed in any one of the preceding claims, **characterized in that** it comprises multi-function sensors.
